# EUROPEAN PATENT SPECIFICATION

(11) **EP 1 424 249 B1**
(45) Date of publication and mention of the grant of the patent: **30.06.2010**
(21) Application number: 02760599.7
(22) Date of filing: 09.08.2002
(51) Int. Cl.: B60R 22/46

(54) **GAS GENERATOR**
GASGENERATOR
GENERATEUR DE GAZ

(30) Priority: 09.08.2001 JP 2001241575
(43) Date of publication of application: 02.06.2004
(73) Proprietor: NIPPON KAYAKU KABUSHIKI KAISHA, Tokyo 102-8172 (JP)
(72) Inventor: KUBO, Dairi, Himeji Factory of NIPPON KAYAKU K.K., Himeji-shi, Hyogo 679-2123 (JP); MARUYAMA, Junya, Himeji Factory NIPPON KAYAKUK.K., Himeji-shi, Hyogo 679-2123 (JP); IKEDA, Kenjiro, Himeji Factory NIPPON KAYAKU K.K., Himeji-shi, Hyogo 679-2123 (JP)
(74) Representative: Intes, Didier Gérard André
(86) International application number: PCT/JP2002/008176
(87) International publication number: WO 2003/022645

(56) References cited:
- EP-A- 0 888 935
- EP-A- 0 897 839
- EP-A- 1 252 923
- WO-A-01/51192
- WO-A-01/51193
- WO-A1-01/26938
- WO-A1-95/11421
- DE-U1- 20 020 099
- JP-A- 2001 088 653

## Description

### Technical Field

The present invention relates to a gas generator and, more particularly, to a gas generator suitably used for activating an automobile seatbelt pretensioner.

### Background Art

A seatbelt pretensioner is known as one of the safety devices for protecting a vehicle occupant from a shock at a car collision. The pretensioner is activated by a large amount of gas fed from the gas generator to it, to protect the vehicle occupant. The gas generator is provided with a squib serving as an igniter and gas generant and is designed so that the squib is ignited at the collision to cause the ignition and burning of the gas generant, thereby generating a large amount of gas rapidly.

Such a gas generator is described in the document EP 0 888 935. It comprises a hollow body packed with gas generant for generating gas by burning, and a holder disposed in an inside of the hollow body and equipped with an igniter device, wherein a stepped portion is formed in the hollow body. The holder comprises a holder body and a weldable member partly exposed to an outer circumferential portion of the holder and is formed to fit against the stepped portion. Lastly, the weldable member and the hollow body are welded to seal an interior of the hollow body.

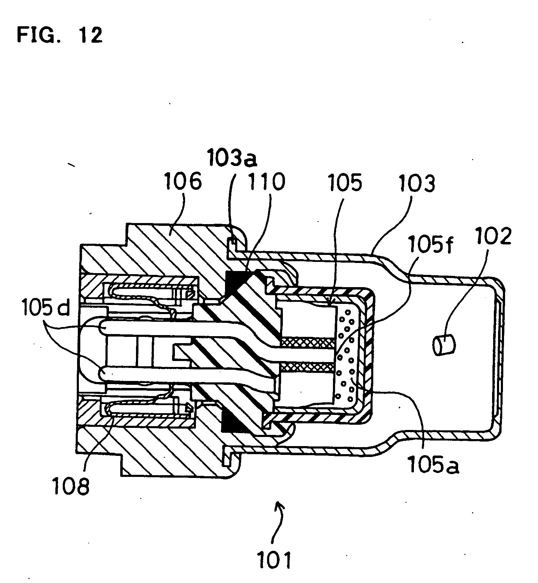

An example of the known gas generators is also shown in FIG. 12. The gas generator 101 of FIG. 12 comprises a hollow body 103 packed with gas generant 102, an igniter 105 containing igniting agents 105a, and a holder 106 fitted with the igniter 105 and the hollow body 103 and containing the gas generant 102 in a space defined therebetween. The hollow body 103 is fixed to the holder 106 by crimping the holder 106 onto a radially outwardly projecting flanged portion 103a of the hollow body 103. The igniter 105 includes two upstanding electrode pins 105d to receive signal from a sensor, not shown, and apply an electric current to the igniter in accordance with the signal and also has a container formed of stainless steel and glass. A bridge wire 105f is bridged over tip ends of the electrode pins 105d to be placed in contact with the igniting agents 105a packed in the inside. The holder 106 to be assembled in the seatbelt pretensioner is made of proper material, such as iron and aluminum, for preventing the gas generator from being scattered by the internal pressure when put into operation. The hollow body 103 is formed in a stepped cup shape having a larger diameter portion than a bottom of the cup. An O-ring 110 is provided at the interface between the holder 106 and the igniter 105 in order to prevent entrainment of moisture from outside. The holder 106 is crimped to hold the O-ring 110 and the igniter 105 rigidly. Also, a shorting clip 108 is fitted in the holder 106 to short the electrode pins 105d of the igniter 105 so as to prevent improper operation that may be produced by static electricity.

The gas generator 101 is operated in such a way that when the igniter 101 receives the signal from the sensor, the igniting agents 105a contained in the igniter 105 is ignited by the igniter 105 first and then the gas generant 102 is ignited and burnt through contact with flames of the igniting agents.

This type of conventional gas generator requires two crimping steps for the assembly, but this is not desirable from the standpoint of ensuring the protection against entrainment of moisture from outside. This is because the more the number of process steps increases, the more strict control on dimensions the crimping portions of the respective members requires and the more control inspection items increases. In addition, since this conventional type one requires sealing members such as the O-ring and sealant, the number of components is also increased.

It is an object of the present invention to provide a gas generator used for a seatbelt pretensioner or equivalent that can be produced with a reduced number of processes and a reduced cost, while providing a high reliability.

### Disclosure of the Invention

A gas generator of the present invention is a gas generator comprising a hollow body packed with gas generant for generating gas by burning, and a holder disposed in an inside of the hollow body and equipped with an igniter device.

A stepped portion is formed in the hollow body. The holder comprises a holder body and a weldable member partly exposed to an outer circumferential portion of the holder and is formed to fit against the stepped portion. The weldable member and the hollow body are welded to seal an interior of the hollow body.

This construction can provide the result that the holder can be positioned with a reduced number of components and can also be fixed to the hollow body reliably, to make a seal between the holder and the hollow body.

It is preferable that the weldable member comprises a tubular portion and a disk portion forming holes therein. It is also preferable that the holes have an area in the range of 0.8mm² or more to 8mm² or less of an area of the disk portion.

Preferably, the holder body is molded by an injection molding using insulating material. Also, it is preferable that the holder has the weldable member with its tubular portion exposed to the outer circumferential surface of the holder and the igniter device, which are formed as an integral whole by the insulating material forming the holder body.

The construction noted above can provide the result that the holder can be molded into a desired shape and also the weldable member and the igniting device can be formed as an integral whole with a low cost. This enables the igniter device to be held reliably by the holder.

It is preferable that the weldable member comprises a disk portion forming a plurality of holes therein and inserted in the holder body, and a tubular portion exposed to an outer circumference of the holder body and having an outer diameter substantially equal to the outer circumference of other portions of the holder body than the tubular portion, and the weldable member and the holder body are formed as an integral whole by an insert molding.

This construction can provide the result that the weldable member and the insulating material are formed as an integral part, thus ensuring the fixing of the weldable member. This can prevent rotating of the igniter device integrally held in the insulating material, ensuring the holding of the igniter device.

It is preferable that the weldable member is welded around an entire circumference of an opening of the hollow body.

This construction can provide the result of ensuring that the hollow body and the holder can be fixed to each other simply by welding around the opening of the hollow body, thus providing a reduced number of components of the gas generator. Also, the welding around the opening of the hollow body can provide the advantage of preventing heat transfer generated in the welding to the gas generant contained in the bottom of the hollow body.

Further, it is preferable that a seal member is provided in a part of the holder. This construction can ensure the sealing of an interior of the hollow body.

In addition, it is preferable that the hollow body is crimped radially inwardly together with insulating material forming the holder at a fitting engagement portion of the holder and the hollow body.

This construction can provide the result that the insulating material serves as a substitute for the sealing member, ensuring the sealing of an interior of the hollow body. This can also ensure the fixing between the hollow body and the holder.

### Brief Description of the Drawings

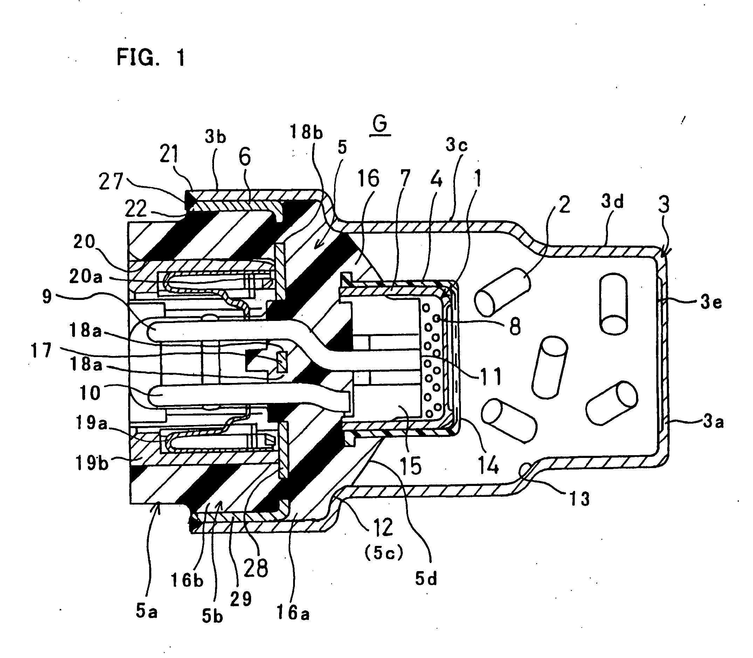

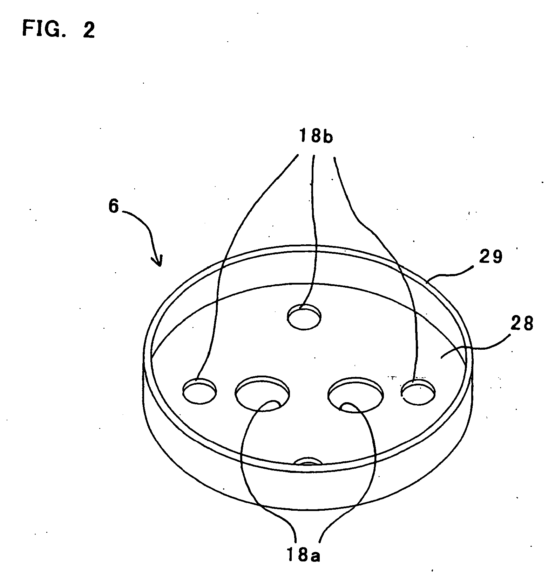

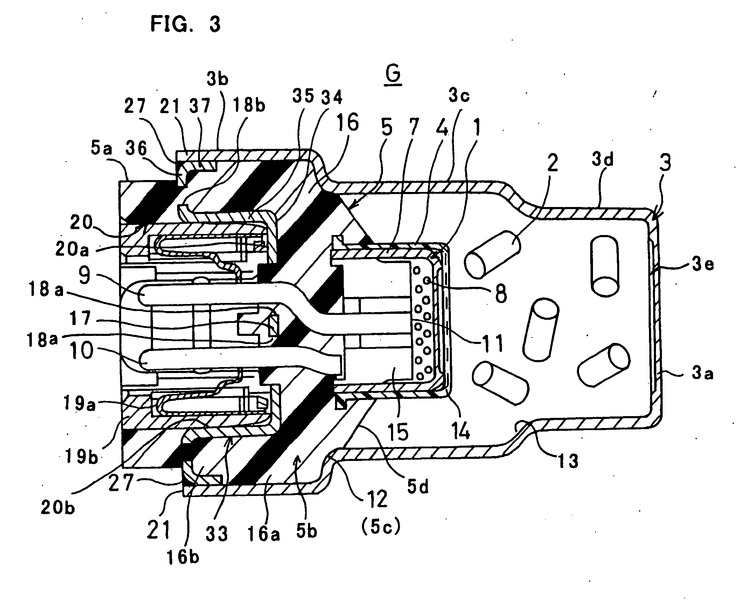

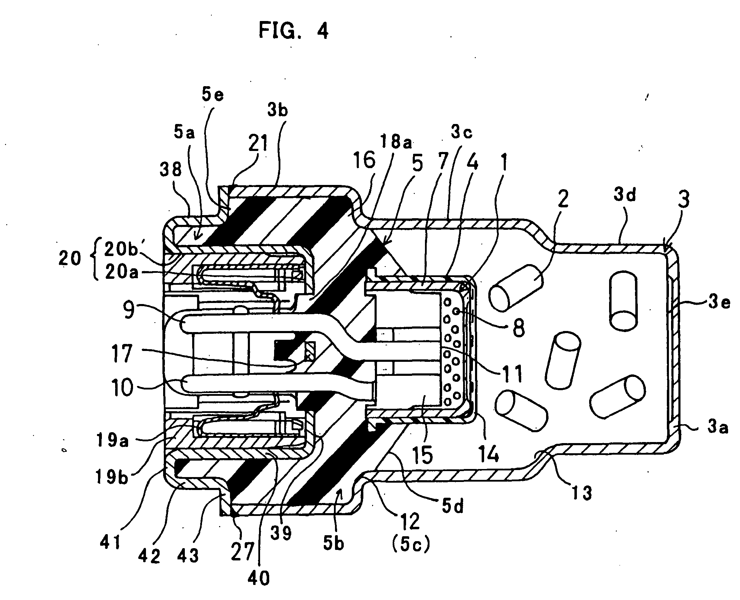

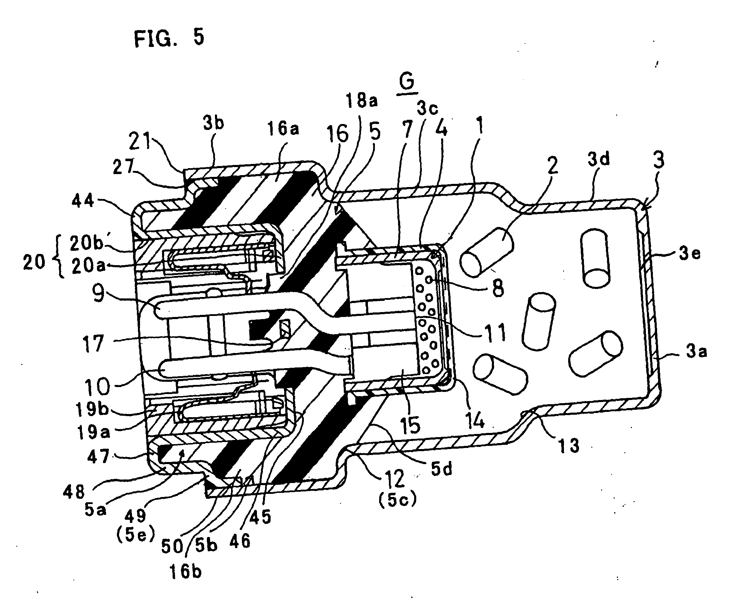

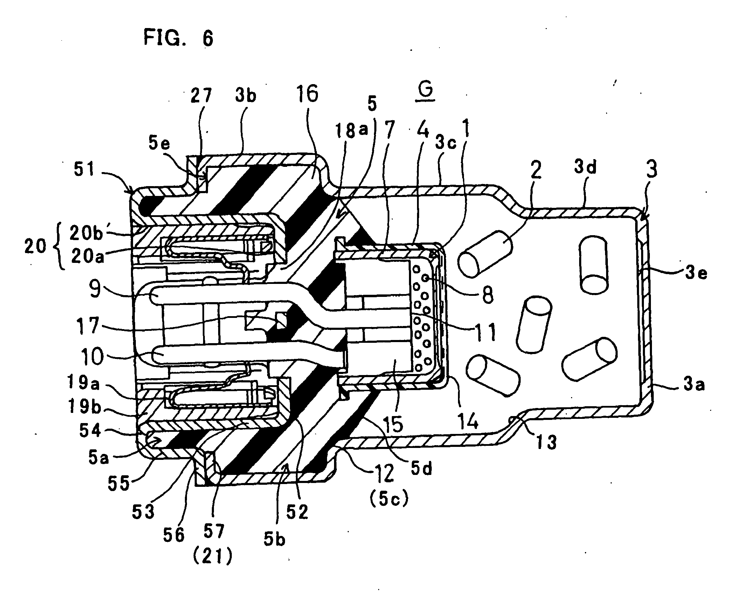

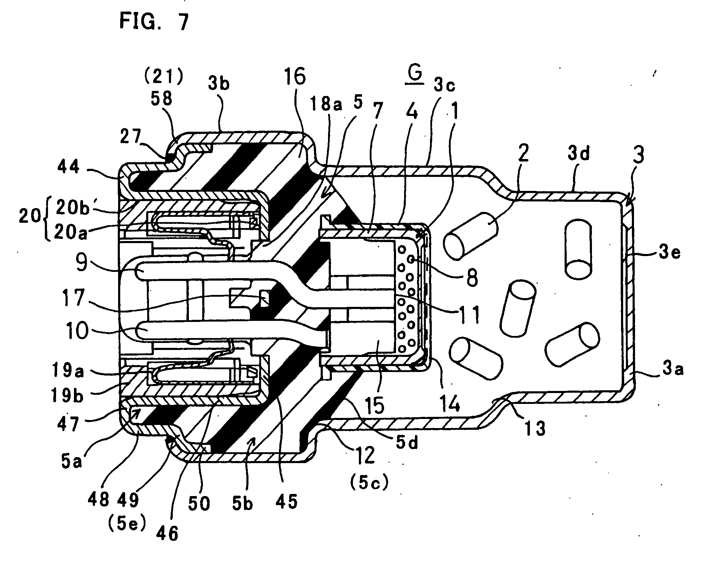

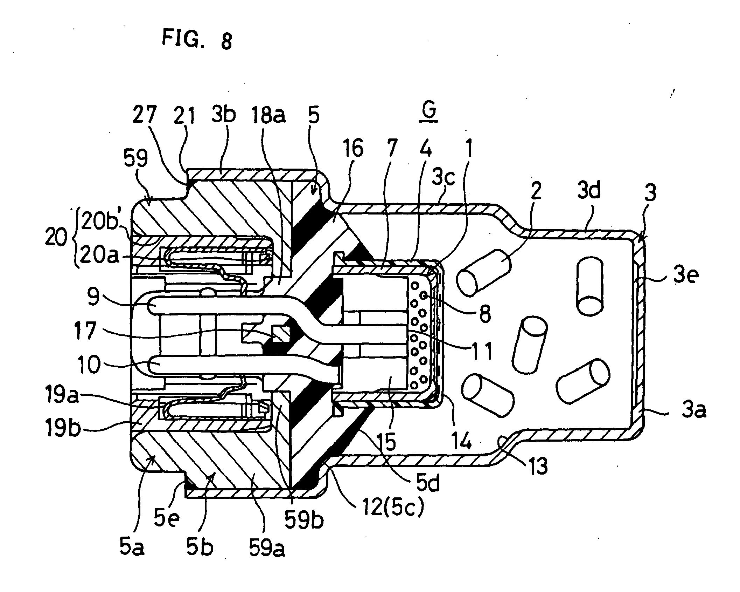

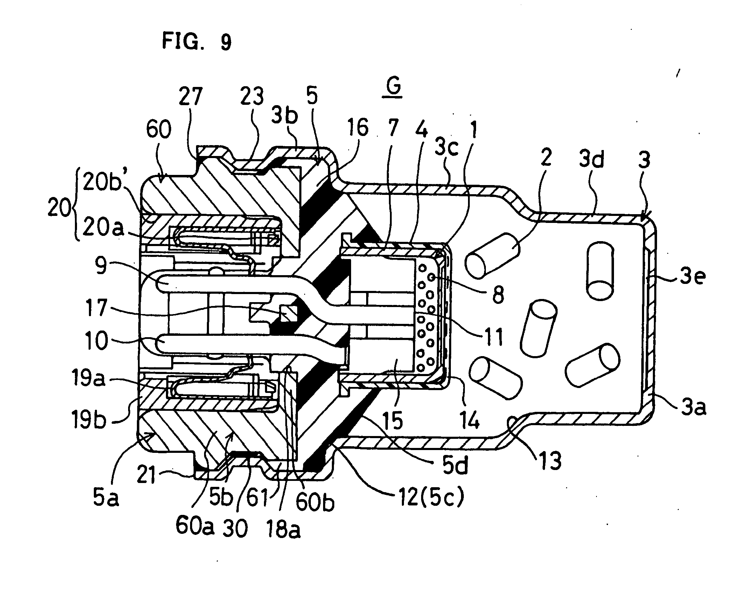

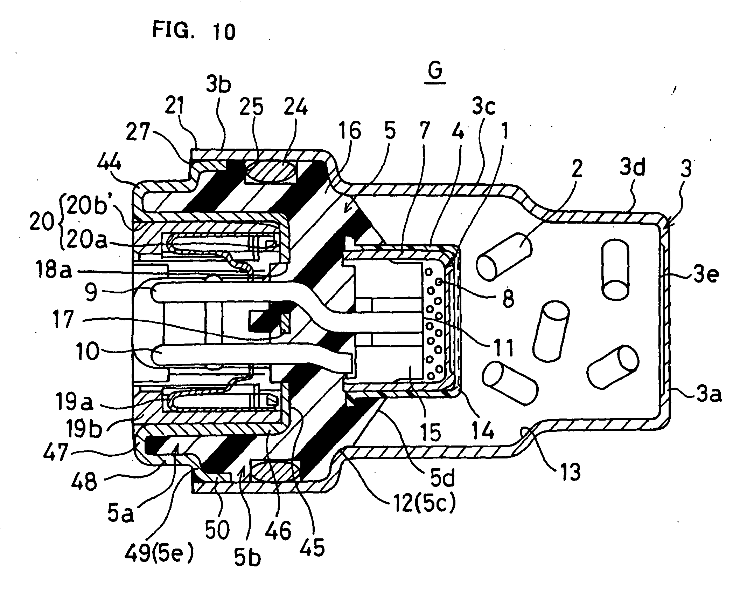

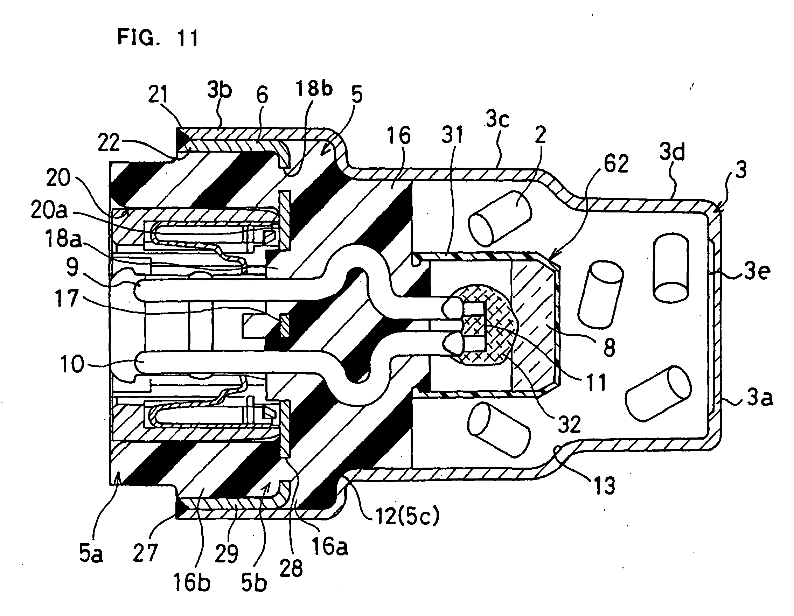

FIG. 1 is a sectional view of an assembled gas generator of the first embodiment according to the present invention. FIG. 2 is a diagram showing a weldable member of FIG. 1. FIG. 3 is a sectional view of an assembled gas generator of the second embodiment according to the present invention. FIG. 4 is a sectional view of an assembled gas generator of the third embodiment according to the present invention. FIG. 5 is a sectional view of an assembled gas generator of the fourth embodiment according to the present invention. FIG. 6 is a sectional view of an assembled gas generator of the fifth embodiment according to the present invention. FIG. 7 is a sectional view of an assembled gas generator of the sixth embodiment according to the present invention. FIG. 8 is a sectional view of an assembled gas generator of the seventh embodiment according to the present invention. FIG. 9 is a sectional view of an assembled gas generator of the eighth embodiment according to the present invention. FIG. 10 is a sectional view of an assembled gas generator of the ninth embodiment according to the present invention. FIG. 11 is a sectional view of an assembled gas generator of the tenth embodiment according to the present invention. FIG. 12 is a sectional view of a conventional gas generator.

### Best Mode for Carrying out the Invention

Embodied forms of the gas generator according to the present invention will be described with reference to the accompanied drawings. Referring to FIG. 1, there is shown a gas generator G used for putting an automobile seatbelt pretensioner into operation.

### (Structure)

In FIG. 1, reference numeral 1 denotes an igniter device; 2 denotes gas generant, 3 denotes a hollow body, 4 denotes an igniter device case, 5 denotes a holder, and 6 denotes a weldable member.

The hollow body 3 is a tubular hollow body having an opening at one end and a bottom 3a at the other end. The hollow body 3 has a large diameter portion 3b, a medium diameter portion 3c, a small diameter portion 3d, a first stepped portion 12 between the large diameter portion 3b and the medium diameter portion 3c, and a second stepped portion 13 between the medium diameter portion 3c and the small diameter portion 3d. The hollow body 3 is reduced in diameter in two stages along the way from the one end 21 on the opening side toward the bottom 3a. The hollow body 3 has a first stepped portion 12 and a second stepped portion 13 formed in the inside thereof. The holder 5 fits against the first stepped portion 12.

The materials of the hollow body 3 that may be used include metals such as stainless steel and aluminum.

The gas generant 2 is contained in the hollow body 3 on the bottom 3a side thereof. The hollow body 3 has a plurality of notches 3e in the bottom 3a. The notches 3e are arranged radially from an axis of the hollow body 3 and are notched in the bottom 3a with a predetermined depth from an inside of the hollow body 3. When pressure increase in the hollow body 3 is caused by the burning of the gas generant 2, the notches 3e are opened to form gas discharge holes, allowing an internal space in the hollow body 3 to communicate with external through the discharge holes.

The holder 5 is inserted in the hollow body 3, serving as means for closing the opening of the hollow body 3 and means for holding the igniter 1 at a predetermined position in the hollow body 3.

The holder 5 is a generally columnar member having first and second columnar portions 5a, 5b, a shoulder portion 5c, and a tapered portion 5d formed continuously.

The tapered portion 5d holds the igniter device case 4 of the igniter device 1 as is described later and is inserted in the hollow body 3 to make the igniter device confront the gas generant 2. The second columnar portion 5b has a diameter substantially equal to an inner circumference diameter of the large diameter portion 3b of the hollow body 3.

The shoulder portion 5c to fit against the first stepped portion 12 of the hollow body 3 is formed in the outer circumference of the holder 5 by reducing a diameter of the second columnar portion 5b at an end portion thereof on the tapered portion 5d side.

The holder 5 is inserted in the hollow body 3 until the first stepped portion 12 of the hollow body 3 fits against the shoulder portion 5c and thereby the holder 5 is set at a predetermined position in the interior of the hollow body 3.

The first columnar portion 5a has a columnar form smaller in diameter than the second columnar portion 5b. The first and second columnar portions 5a, 5b have, in an interior thereof, a tubular fitting hole 20 of a predetermined depth from the end of the first columnar portion 5a. This is the fitting hole 20 for a plug (mentioned later) to be connected to the igniter device 1.

The holder 5 is formed by molding a holder body 16 and the weldable member 6 to be integral with each other.

The holder body 16 forms part of the first columnar portion 5a, shoulder portion 5c, tapered portion 5d and second columnar portion 5b.

The holder body 16 is formed of insulating material. The insulating materials that may be used for forming the holder body 16 include resins, such as polybutylene terephthalate, polyethylene terephthalate, nylon-6, nylon-66, polyphenylene sulfide, polyphenylene oxide, and polycarbonate, containing glass and the like.

The weldable member 6 and the holder body 16 both form the second columnar portion 5b of the holder 5. The weldable member 6 comprises a disk portion 28 and a tubular portion 29 upstanding from a peripheral edge of the disk portion 28, as shown in FIG. 2. The disk portion 28 has a plurality of holes 18a, 18b.

The disk portion 28 and the tubular portion 29 has a diameter and an outer circumferential diameter, respectively, corresponding to the columnar portion 5b of the holder so that they can form part of the second columnar portion 5b of the holder 5.

The portion of the holder body 16 forming the second columnar portion 5b comprises a larger diameter portion 16a having a diameter equal to the second columnar portion 5b and a small diameter portion 16b having a diameter smaller than the tubular portion 29 of the weldable member 6 by an extent corresponding to thickness of the tubular portion 29.

The tubular portion 29 of the weldable member 6 is exposed on an outer circumferential surface of the holder body 16, so as to cover an outer circumferential surface of the small diameter portion 16b. An outer circumferential surface of the second columnar portion 5b of the holder 5 is formed by the outer circumferential surface of the large diameter portion 16a of the holder body 16 and the outer circumferential surface of the tubular portion 29 of the weldable member 6.

The disk portion 28 of the weldable member 6 is embedded in between the larger diameter portion 16a of the holder body and the small diameter portion 16b of the same, and a part of the disk portion 28 forms a bottom 20a of the fitting hole 20. In this embodiment, the disk portion 28 of the weldable member 6 is embedded to substantially correspond in position to the bottom 20a of the fitting hole 20. Thus, the holder body 16 and the weldable member 6 are formed integral with each other in the manner mentioned above. The weldable member 6 formed integrally with the holder 5 is formed to have substantially equal thickness throughout its entire area and the thickness thereof is from 0.5 to 1.5 times that of the hollow body 3. The weldable member is formed by pressing a weldable metal with the hollow body 3, such as stainless steel or aluminum, into shapes by a press molding and the like. The same metals as those of the hollow body 3, such as stainless steel and aluminum, can be cited as examples of the weldable metals with the hollow body 3.

When the holder body 16 is formed by an injection molding using insulating material, the holes 18a, 18b formed in the disk portion 28 can allow the insulating material to pass through the weldable member to surround the disk portion 28, thus forming the holder body 16 and the weldable member 6 into an integral part. The holes 18a of 18a, 18b double as openings for allowing the passage of the electrode pins 9, 10 of the igniter device 1, as will be mentioned later. While in the illustrated embodiment, the holes 18a for allowing the passage of the electrode pins 9, 10 are made larger in diameter than the holes 18b through which only the resin is poured (See FIG. 2), this is not limitative. It is preferable that the holes 18a for allowing the passage of the electrode pins 9, 10 have an area in the range of 0.8mm² or more to 8mm² or less, or preferably 0.6mm² or more to 5.5mm² or less.

As mentioned above, since the plurality of holes 18a, 18b for allowing the passage of the insulating material enables a land portion, at 17, of the weldable member 6 extending between the respective holes 18a, 18b to be embedded in the insulating material, the weldable member 6, the holder body 16 and the igniter device 1 can surely be formed as an integral part.

The holder body 16 and the weldable member 6 are integrally formed by an insert molding.

In detail, the holder 5 is produced in the following process. After the weldable member 6 used as an insert for the insert molding is set in an injection mold, it is molded by the injection molding. During this injection molding, the insulating material to form the holder body 16 is poured into the plurality of holes 18a, 18b formed in the disk portion 28 of the weldable member 6. Then, the resin is poured around the disk portion 28 of the weldable member 6 to surround it and, as a result, the holder body 16 and the weldable member 6 are formed as an integral part.

Also, during the injection molding of the holder 5, the igniter device 1 including the electrode pins 9, 10 is also molded simultaneously by the insert molding, so that the igniter device 1 and the holder 5 are also formed as an integral part.

A retainer 19b for retaining the plug such as a collision sensor, not shown, having a shorting clip 19a is fitted in the fitting hole 20.

The igniter device 1 formed integral with the holder 5 comprises an igniting agent case 7 inserted in the igniter device case 4, igniting agents 8 contained in the igniting agent case 7, other plug 15 onto which the igniting agent case 7 is fitted, two electrode pins 9, 10, and a bridge wire 11.

The igniter device case 4 is a cup-shaped case for protecting the igniting agent case 7. The igniting agent case 7 is fitted in the igniter device case 4. The igniter device case 4 has a plurality of radially arranged cutouts in the bottom. The cutouts are cut in the bottom with a predetermined depth from an inside of the igniter device case 4. When flames of the igniting agent 8 are spurted, the cutouts are opened to spurt out the flames of the igniting agent 8.

The igniter device case 4 is disposed at the inside of the hollow body 3. The materials that may be used for the igniter device case 4 include resins, such as polybutylene terephthalate, polyethylene terephthalate, nylon-6, nylon-66, polyphenylene sulfide, polyphenylene oxide, and polycarbonate.

The igniter device case 4 is formed of resin to prevent production of sparks by static electricity between the igniting agent case 7 and the hollow body 3.

The igniting agent case 7 is a cup-shaped case for containing the igniting agent 8. The materials that may be used for the igniting agent case 7 include, for example, metals such as stainless steel. An internal space of the igniting agent case 7 is sealed closely by the plug 15 made of e.g. glass or metal such as stainless steel. The igniting agent case 7 also has a plurality of radially arranged cutouts in the bottom. The cutouts are cut in the bottom with a predetermined depth from an inside of the igniting agent case 7. When flames of the igniting agent 8 are spurted, the cutouts are opened to spurt out the flames of the igniting agent 8.

The electrode pins 9, 10 are arranged in parallel with each other in an axial direction of the gas generator G. The electrode pins 9, 10 extend through the plug 15 and the holder body 16 and pass through the holes 18a formed in the disk portion 28 of the weldable member 6 formed integral with the holder body 16, then projecting into the fitting hole 20 of the holder 5. Also, the electrode pins 9, 10 are held firmly in the holder body 16 through the insulating material poured into the holes 18a formed in the disk portion 28 of the weldable member 6 to surround the electrode pins. A land portion 17 of the weldable member 6 is disposed between the electrode pins 9, 10, such that the electrode pins 9, 10, are prevented from coming off from the holder body 16 of the igniter device 1. The electrode pins 9, 10 are formed into shapes curved in the holder body 16 so that they can be reliably held by the insulating material of which the holder body 16 is formed. This can ensure that the electrode pins 9, 10, are prevented from being pulled out of the holder body 16 of the igniter device 1.

The electrode pins 9, 10 are formed of conductive material, such as stainless steel and iron-nickel alloy, and are electrically insulated by the insulating material of the holder 5. Further, a bridge wire 11 is welded to tip ends of the electrode pins 9, 10 in the igniting agent case 7. The bridge wire 11 is in contact with the igniting agents 8 packed in the igniting agent case 7.

Thus, the holder 5 is formed integral with the igniter device 1 comprising the igniting agent case 7, the igniting agents 8, the plug 15, and the electrode pins 9, 10.

### (Production)

The gas generator G thus constructed is produced in the following steps.

First, the igniter device 1 and the weldable member 6 are inserted and set in the mold for molding the holder body 16 and, then, the resin of the insulating material is poured into the mold. In this step, the holder 5 formed integral with the igniter device 1 and the weldable member 6 is produced.

Sequentially, the gas generant 2 is packed in the hollow body 3 in a region thereof on the bottom 3a side. Then, the holder 5 is inserted in the hollow body 3 to make the igniter device 1 confront the gas generant 2. The hollow body 3 is fitted onto the holder 5 to make the stepped portion 12 of the hollow body 3 fit snugly against the shoulder portion 5c of the holder 5.

Sequentially, a tubular portion 29 of the weldable member 6 and the hollow body 3 are welded at their contact-point portions, at 27, at their ends 22, 21 on the opening side of the hollow body 3, such that the hollow body 3 and the holder 5 are intimately contacted with and integrally fixed to each other. In the diagram, reference numeral 27 denotes the welded portions.

### (Operation)

In the gas generator G thus constructed, when the electric current is applied to the electrode pins 9, 10 of the igniter device 1, the bridge wire 11 is heated to cause ignition of the igniting agents 8. Then, the flames of the igniting agents 8 of the igniter device 1 are spurted into the hollow body 3, to cause the ignition and burning of the gas generant 2, thereby generating a large amount of gases rapidly.

Then, the large amount of gases generated in the hollow body 3 causes the inner-pressure increase of the hollow body 3. This increase in the inner pressure causes the bottom 3a to be opened at the notches 3e, then forming a gas discharge hole. Then, the gas is fed into the seatbelt pretensioner through the gas discharge hole, causing the seatbelt pretensioner to be actuated by the high-pressure gas so as to tighten the seatbelt.

### (Effect)

In the gas generator G of this embodiment, since the first stepped portion 12 is formed in the hollow body 3 and also the holder 5 is formed to fit against the first stepped portion 12, the hollow body 3 and the holder 5 can be fixed at the predetermined position.

Also, since the hollow body 3 and the weldable member 6 are integrally formed in part of the holder 5, the hollow body 3 and the holder 5 can be fixed to each other by welding to make the seal between the hollow body 3 and the holder 5. In addition, since the insert molding is just required to form the holder body 16 and the weldable member 6 as the integral part, the gas generator G according to this embodiment enables the ease and reliable fixing between the hollow body 3 and the holder 5 with a reduced number of parts and processes.

### (Gas generant)

Now, reference will be made to the gas generant used in this embodiment. The gas generant contained in the hollow body 3 comprises, for example, nitrogen-containing organic compound and inorganic compound. If desired, an additive may be added thereto. The nitrogen-containing organic compound mainly serves as a fuel component. The inorganic compound mainly serves as an oxidizing agent component.

The nitrogen-containing organic compounds that may be used include at least one material selected from the group consisting of aminotetrazole, guanidine nitrate, and nitroguanidine. The inorganic compounds that may be used include at least one material selected from the group consisting of strontium nitrate, ammonium nitrate, potassium nitrate, ammonium perchlorate, and potassium perchlorate.

The additives that may be used include molybdenum trioxide which is an autoignition catalyst.

Binder and equivalent can be cited as the other additive to be added to the gas generant. The binders that may be used include at least one material selected from the group consisting of cyamoposis gum, methyl cellulose, carboxymethyl cellulose, nitrocellulose, water-soluble cellulose ether and polyethylene glycol.

A preferable gas generant is the one comprising 5-aminotetrazole and guanidine nitrate used as' the nitrogen-containing organic compound; strontium nitrate and ammonium perchlorate used as the inorganic compound; molybdenum trioxide used as the autoignition catalyst; and cyamoposis gum used as the binder. Further preferably, the gas generant comprises 10 mass% or more to 30 mass% or less 5-aminotetrazole used as the nitrogen-containing organic compound and 15 mass% or more to 35 mass% or less guanidine nitrate; 10 mass% or more to 30 mass% or less strontium nitrate used as the inorganic compound; 15 mass% or more to 35 mass% or less ammonium perchlorate; 1 mass% or more to 10 mass% or less molybdenum trioxide used as the autoignition catalyst; and 1 mass% or more to 10 mass% or less cyamoposis gum used as the binder.

The manufacturing method of these gas generant 2 will be described. A prescribed amount of each of the components of the gas generant 2 is measured. After the measurement, the components are fully stirred with a V-type stirring machine. 10 mass% or more to 30 mass% or less water is added to the mixture and stirred further. The wet mixture is kneaded with a kneader to produce a viscous clot. This viscous clot is molded into a desired form with a vacuum extruding machine. The extruded products are dried at 60°C for 15 hours and then at 100°C for 5 hours to produce desired gas generant 2. Further, generally used smokeless powder may also be properly used as the gas generant.

### (Second embodiment)

The second embodiment is shown in FIG. 3. In FIG. 3, the same reference characters as those in FIG. 1 refer to the corresponding members, omitting the detailed description thereon. Difference of this embodiment from the embodiment of FIG. 1 is in the form of the weldable member 33.

The weldable member 33 has a disk portion 34, a first tubular portion 35, a circular plate portion 36 and a second tubular portion 37 which form an integral whole.

The disk portion 34 has a plurality of holes 18a, 18b identical with the holes 18a, 18b in the disk portion 28 shown in FIG. 1. When the holder body 16 is molded from resin, the holes 18a, 18b formed in the disk portion 34 can allow the resin to pass through to surround the disk portion 34, thus forming the holder body 16 and the weldable member 33 into an integral part.

The disk portion 34 has a diameter substantially equal to a diameter of the fitting hole 20 at the bottom 20a. The first tubular portion 35 has an inner diameter substantially equal to the diameter of the fitting hole 20. Also, the first tubular portion 35 has a height substantially equal to the depth of the fitting hole 20 at a portion corresponding to the second columnar portion 5b of the holder 5. A marginal portion of the disk portion 34 and one end portion of the first tubular portion 35 are integrally connected to each other. The disk portion 34 and first tubular portion 35 of the weldable member 33 in the second columnar portion 5b of the holder 5 form the bottom 20a and a part 20b of a side surface of the fitting hole 20, respectively.

The second tubular portion 37 corresponds in outer diameter to the second columnar portion 5b of the holder 5, to form part of the second columnar portion 5b of the holder 5.

An outer circumferential surface at the small diameter portion 16b of the holder body 16 is exposed to the outer circumferencial surface of the holder body 16, to cover the small diameter portion 16b with the second tubular portion 37 of the weldable member 33. The outer circumferential surface at the large diameter portion 16a of the holder body 16 and the outer circumferential surface at the second tubular portion 37 of the weldable member 6 form the outer circumferential surface in the second columnar portion 5b of the holder 5. The second tubular portion 37 is exposed at an end thereof on the first columnar portion 5a side of the second columnar portion 5b of the holder 5.

The circular plate portion 36 has an inner circumferential diameter substantially equal to the diameter of the fitting hole 20. It also has an outer circumferential diameter substantially equal to a diameter of the second columnar portion 5b of the holder 5. An end of the circular plate portion 36 on the inner circumference side is integrally connected to the other end of the first tubular portion 35. An end of the circular plate portion 36 on the outer circumference side is integrally connected to an end of the second tubular portion 37 on the first columnar portion 5a side. The circular plate portion 36 has the holes 18b to provide the same function as the holes 18b in the disk portion 34.

The second tubular portion 37 of the weldable member 33 is in contact with the larger diameter portion 3b of the hollow body 3 and is welded to an end 21 of the hollow body 3 on the opening side. Reference numeral 27 denotes the welded portion.

### (Third embodiment)

The third embodiment is shown in FIG. 4. In FIG. 4, the same reference characters as those in FIG. 1 refer to the corresponding members, omitting detailed description thereon. Difference of this embodiment from the embodiment of FIG. 1 is in the form of the weldable member 38.

The weldable member 38 has a disk portion 39, a first tubular portion 40, a first circular plate portion 41, a second tubular portion 42, and a second circular plate portion 43 which form an integral whole.

The disk portion 39 has a plurality of holes 18a, 18b identical with the holes 18a, 18b in the disk portion 28 shown in FIG. 1. When the holder body 16 is molded from resin, the holes 18a, 18b formed in the disk portion 39 can allow the resin to pass through to surround the disk portion 39, thus forming the holder body 16 and the weldable member 38 into an integral part.

The disk portion 39 has a diameter substantially equal to the diameter of the fitting hole 20 at the bottom 20a.

The first tubular portion 40 has an inner diameter substantially equal to the diameter of the fitting hole 20. Also, the first tubular portion 40 has a height substantially equal to the depth of the fitting hole 20 in the first and second columnar portions 5a, 5b of the holder 5.

A marginal portion of the disk portion 39 and one end portion of the first tubular portion 40 are integrally connected to each other. The disk portion 39 and first tubular portion 40 of the weldable member 38 form the bottom 20a and the side surface 20b' of the fitting hole 20 in the first and second columnar portions 5a, 5b of the holder 5, respectively.

The second tubular portion 42 has an outer diameter substantially equal to the diameter of the first columnar portion 5a of the holder 5 and forms an outer circumferential surface of the first columnar portion 5a of the holder 5.

The first circular plate portion 41 has an inner diameter substantially equal to the diameter of the fitting hole 20. Also, it has an outer diameter substantially equal to the diameter of the first columnar portion 5a of the holder 5. An end of the first circular plate portion 41 on the inner circumference side is integrally connected to the other end of the first tubular portion 40, and an end of the first circular plate portion 41 on the outer circumference side is integrally connected to one end of the second tubular portion 42.

The second circular plate portion 43 has an inner diameter substantially equal to the diameter of the first columnar portion 5a of the holder 5. Also, it has an outer diameter substantially equal to the diameter of the second columnar portion 5b of the holder 5. An end of the second circular plate portion 43 on the inner circumference side is integrally connected to the other end of the second tubular portion 42, and an end of the second circular plate portion 43 on the outer circumference side is integrally connected to the end 21 of the hollow body 3 on the opening side. The end of the second circular plate portion 43 on the outer circumference side is abutted with the end 21 of the hollow body 3 on the opening side. The second circular plate portion 43 covers a shouldered portion 5e defined by the difference in diameter between the first and second columnar portions 5a, 5b of the holder 5.

The end of the weldable member 38 on the outer circumference side of the second circular plate portion 43 is welded to the end 21 of the hollow body 3 on the opening side. Reference numeral 27 denotes the welded portion.

The holder body 16 can be made unexposed by use of this type of weldable member 38 for protection of the holder body 16 of low mechanical strength and susceptible to crack by impact or equivalent.

### (Fourth embodiment)

The fourth embodiment is shown in FIG. 5. In FIG. 5, the same reference characters as those in FIG. 1 refer to the corresponding members, omitting detailed description thereon. Difference of this embodiment from the embodiment of FIG. 1 is in the form of the weldable member 44.

The weldable member 44 has a disk portion 45, a first tubular portion 46, a first circular plate portion 47, a second tubular portion 48, a second circular plate portion 49 and a third tubular portion 50 which form an integral whole.

The disk portion 45 has a plurality of holes 18a, 18b identical with the holes 18a, 18b in the disk portion 28 shown in FIG. 1. When the holder body 16 is molded from resin, the holes 18a, 18b formed in the disk portion 45 can allow the resin to pass through to surround the disk portion 45, thus forming the holder body 16 and the weldable member 44 into an integral part.

The disk portion 45 has a diameter substantially equal to the diameter of the fitting hole 20 at the bottom 20a.

The first tubular portion 46 has an inner diameter substantially equal to the diameter of the fitting hole 20. Also, the first tubular portion 46 has a height substantially equal to the depth of the fitting hole 20 in the first and second columnar portions 5a, 5b of the holder 5.

A marginal portion of the disk portion 45 and one end portion of the first tubular portion 46 are integrally connected to each other. The disk portion 45 and first tubular portion 46 of the weldable member 44 form the bottom 20a and the side surface 20b' of the fitting hole 20 in the first and second columnar portions 5a, 5b of the holder 5, respectively.

The second tubular portion 48 has an outer diameter substantially equal to the diameter of the first columnar portion 5a of the holder 5 and forms an outer circumferential surface of the first columnar portion 5a of the holder 5.

The first circular plate portion 47 has an inner diameter substantially equal to the diameter of the fitting hole 20. Also, it has an outer diameter substantially equal to the diameter of the first columnar portion 5a of the holder 5. An end of the first circular plate portion 47 on the inner circumference side is integrally connected to the other end of the first tubular portion 46, and an end of the first circular plate portion 41 on the outer circumference side is integrally connected to one end of the second tubular portion 48.

The third tubular portion 50 has an outer diameter substantially equal to the diameter of the second columnar portion 5b of the holder 5. The third tubular portion 50 forms an outer circumferential surface of the second columnar portion 5b of the holder 5 at an end portion thereof on the first columnar portion 5a side. The third tubular portion 50 forms an outer circumferential surface in the larger diameter portion 16a of the holder body 16 and an outer circumferential surface of the second columnar portion 5b of the holder 5.

The second circular plate portion 49 has an inner diameter substantially equal to the diameter of the first columnar portion 5a of the holder 5. Also, it has an outer diameter substantially equal to the diameter of the second columnar portion 5b of the holder 5. An end of the second circular plate portion 49 on the inner circumference side is integrally connected to the other end of the second tubular portion 42, and an end of the second circular plate portion 49 on the outer circumference side is integrally connected to the other end of the third tubular portion 50. The second circular plate portion 49 covers the shouldered portion 5e defined by the difference in diameter between the first and second columnar portions 5a, 5b of the holder 5.

The third tubular portion 50 of the weldable member 44 is in contact with the larger diameter portion 3b of the hollow body 3 and is welded to the end 21 of the hollow body 3 on the opening side. Reference numeral 27 denotes the welded portion.

The holder body 16 can be made unexposed by use of this type of weldable member 44 for protection of the holder body 16 of low mechanical strength and susceptible to crack by impact or equivalent.

### (Fifth embodiment)

The fifth embodiment is shown in FIG. 6. In FIG. 6, the same reference characters as those in FIG. 1 refer to the corresponding members, omitting detailed description thereon. Difference of this embodiment from the embodiment of FIG. 1 is in the form of the weldable member 51 and the form of the end 21 of the hollow body 3 on the opening side.

The hollow body 3 is provided, at the end 21 thereof on the opening side, with crimping lugs 57 for engagement with the second columnar portion 5b of the holder 5. The crimping lugs 57 are engaged with the second columnar portion 5b of the holder 5 in the following way. The holder 5 is inserted in the hollow body 3. After the first stepped portion 12 of the hollow body 3 and the shoulder portion 5c of the holder 5 fits with each other, the crimping lugs 57 is folded back to the shouldered portion 5e defined by the difference between the first and second columnar portions 5a, 5b of the holder 5, thereby bringing the crimping lugs 57 into engagement with the second columnar portion 5b.

The weldable member 51 has a disk portion 52, a first tubular portion 53, a first circular plate portion 54, a second tubular portion 55, and a second circular plate portion 56 which form an integral whole.

The disk portion 52 has a plurality of holes 18a, 18b identical with the holes 18a, 18b in the disk portion 28 shown in FIG. 1. When the holder body 16 is molded from resin, the holes 18a, 18b formed in the disk portion 52 can allow the resin to pass through to surround the disk portion 52, thus forming the holder body 16 and the weldable member 51 into an integral part.

The disk portion 52 has a diameter substantially equal to the diameter of the fitting hole 20 at the bottom 20a.

The first tubular portion 53 has an inner diameter substantially equal to the diameter of the fitting hole 20. Also, the first tubular portion 53 has a height substantially equal to the depth of the fitting hole 20 in the first and second columnar portions 5a, 5b of the holder 5.

A marginal portion of the disk portion 52 and one end portion of the first tubular portion 53 are integrally connected to each other. The disk portion 52 and first tubular portion 53 of the weldable member 51 form the bottom 20a and the side surface 20b' of the fitting hole 20 in the first and second columnar portions 5a, 5b of the holder 5, respectively.

The second tubular portion 55 has an outer diameter substantially equal to the diameter of the first columnar portion 5a of the holder 5 and forms an outer circumferential surface of the first columnar portion 5a of the holder 5.

The first circular plate portion 54 has an inner diameter substantially equal to the diameter of the fitting hole 20. Also, it has an outer diameter substantially equal to the diameter of the first columnar portion 5a of the holder 5. An end of the first circular plate portion 54 on the inner circumference side is integrally connected to the other end of the first tubular portion 53, and an end of the first circular plate portion 54 on the outer circumference side is integrally connected to one end of the second tubular portion 55.

The second circular plate portion 56 has an inner diameter substantially equal to the diameter of the first columnar portion 5a of the holder 5. Also, it has an outer diameter substantially equal to the diameter of the second columnar portion 5b of the holder 5. An end of the second circular plate portion 56 on the inner circumference side is integrally connected to the other end of the second tubular portion 55. The second circular plate portion 56 covers the shouldered portion 5e defined by the difference in diameter between the first and second columnar portions 5a, 5b of the holder 5 or covers the crimping lugs 57 of the hollow body 3.

The end of the weldable member 51 on the outer circumference side of the second circular plate portion 56 is welded to the end 21 of the hollow body 3 on the opening side or is welded to the crimping lugs 57 of the hollow body 3. Reference numeral 27 denotes the welded portion.

The holder body 16 can be made unexposed by use of this type of weldable member 51 for protection of the holder body 16 of low mechanical strength and susceptible to crack by impact or equivalent.

### (Sixth embodiment)

The sixth embodiment is shown in FIG. 7. The sixth embodiment is similar to the fourth embodiment shown in FIG. 5. Difference of this embodiment of FIG. 7 from the embodiment of FIG. 5 is in the form of the end 21 of the hollow body 3 on the opening side. In FIG. 7, the same reference characters as those in FIG. 5 refer to the corresponding members, omitting detailed description thereon.

The hollow body 3 is provided, at the end 21 thereof on the opening side, with crimping lugs 58 for engagement with the second circular plate portion 49 of the weldable member 44.

The crimping lugs 58 are engaged with the second circular plate portion 49 of the weldable member 44 in the following way. The holder 5 is inserted in the hollow body 3. After the first stepped portion 12 of the hollow body 3 and the shoulder portion 5c of the holder 5 fits with each other, the crimping lugs 58 are folded back to the shouldered portion 5e defined by the difference between the first and second columnar portions 5a, 5b of the holder 5 or to the second circular plate portion 49, thereby bringing the crimping lugs 58 into engagement with the second circular plate portion 49 of the weldable member 44. Then, those engaging portions are welded to each other at 27. Reference numeral 27 denotes the welded portion.

Thus, in this embodiment, the holder 5 and the hollow body 3 can be reliably fixed to each other by crimping as well as by welding.

The holder body 16 can be made unexposed by use of this type of weldable member 44 for protection of the holder body 16 of low mechanical strength and susceptible to crack by impact or equivalent.

### (Seventh embodiment)

The seventh embodiment is shown in FIG. 8. In FIG. 8, the same reference characters as those in FIG. 1 refer to the corresponding members, omitting detailed description thereon. Difference of this embodiment from the embodiment of FIG. 1 is in the form of a weldable member 59.

In FIG. 8, the weldable member 59 is formed by a columnar portion of the holder 5 in which the fitting hole 20 is formed. The weldable member 59 has a tubular portion 59a forming the side wall 20b' of the fitting hole 20 and a disk-like bottom portion 50b forming the bottom 20a of the fitting hole 20 which form an integral whole.

The weldable member 59 forms part of the first columnar portion 5a and second columnar portion 5b of the holder 5. Another part of the second columnar portion 5b, the shoulder portion 5c and the tapered portion 5d of the holder 5 correspond to the holder body 16 made of resin.

The weldable member 59 has, in a bottom 59b thereof, a plurality of holes 18a, 18b identical with the holes 18a, 18b in the disk portion 28 shown in FIG. 1. When the holder body 16 is molded from resin, the holes 18a, 18b formed in the bottom of the weldable member 59 can allow the resin to pass through to surround the bottom 59b of the weldable member 59, thus forming the holder body 16 and the weldable member 59 into an integral part.

After the holder 5 is inserted in the hollow body 3 until the first stepped portion 12 of the hollow body 3 and the shoulder portion 5c of the holder 5 fits with each other, the end of the second columnar portion 5b of the holder 5 on the first columnar portion 5a side and the end 21 of the hollow body 3 on the opening side are' welded to each other at 27. Reference numeral 27 denotes the welded portion.

The use of this type of weldable member 59 can provide an increased strength of the holder 5.

### (Eighth embodiment)

The eighth embodiment is shown in FIG. 9. In FIG.' 9, the same reference characters as those in FIG. 1 refer to the corresponding members, omitting detailed description thereon. Difference of this embodiment from the embodiment of FIG. 1 is in the form of a weldable member 60 and the form of the large diameter portion 3b of the hollow body 3.

In FIG. 9, the weldable member 60 has a sufficient strength to resist a crimping force. The weldable member 60 is formed by a columnar portion of the holder 5 in which the fitting hole 20 is formed.

The weldable member 60 has a tubular portion 60a forming the side wall 20b' of the fitting hole 20 and a disk-like bottom portion 60b forming the bottom 20a of the fitting hole 20 which form an integral whole. The weldable member 60 forms part of the first columnar portion 5a and second columnar portion 5b of the holder 5. Another part of the second columnar portion 5b, the shoulder portion 5c and the tapered portion 5d of the holder 5 correspond to the holder body 16 made of resin.

Further, the weldable member 60 has a crimping groove 30 formed to extend circumferentially in the outer circumferential surface of the second-columnar-portion-5b-forming part of the holder 5. In addition, the outer circumferential surface of the second-columnar-portion-5b-forming part of the weldable member 60 is coated with the same resin 61 as that of the holder body 16 made of resin or with the insulating material 61. The insulating material 61 extends continuously from the holder body 16.

The weldable member 60 has, in a bottom 60b thereof, a plurality of holes 18a, 18b identical with the holes 18a, 18b in the disk portion 28 shown in FIG. 1. When the holder body 16 is molded from resin, the holes 18a, 18b formed in the bottom of the weldable member 60 can allow the resin to pass through to surround the bottom 60b of the weldable member 60, thus forming the holder body 16 and the weldable member 60 into an integral part.

The hollow body 3 is brought into engagement with the weldable member 60 in the following manner. After the holder 5 is inserted in the hollow body 3 until the first stepped portion 12 of the hollow body 3 and the shoulder portion 5c of the holder 5 fits with each other, a part 23 of the large diameter portion 3b of the hollow body 3 is folded to fit in the crimping groove 30 in the weldable member 60, in other words, is crimped radially inwardly. This brings the weldable member 60 and the hollow body 3 into engagement with each other.

Then, the end of the second columnar portion 5b of the holder 5 on the first columnar portion 5a side and the end 21 of the hollow body 3 on the opening side are welded to each other at 27. Reference numeral 27 denotes the welded portion.

The use of the weldable member 60 having this increased wall thickness can provide an increased strength of the holder 5.

This combination of crimping and welding enables the hollow body 3 to be fixed to the holder 5 further tightly.

In this process, the insulating material of the holder body 16 is also crimped together, so that the insulating material is sandwiched between the weldable member 60 and the hollow body 3. The insulating material thus sandwiched therebetween serves as a sealing material to seal the hollow body 3. This can ensure that the hollow body 3 and the holder 5 are fixed to each other and also the interior of the hollow body 3 is sealed.

### (Ninth embodiment)

The ninth embodiment is shown in FIG. 10. The ninth embodiment is similar to the fourth embodiment shown in FIG. 5. Difference of this embodiment of FIG. 10 from the embodiment of FIG. 5 is in the form of the holder 5. The same reference characters as those in FIG. 5 refer to the corresponding members, omitting detailed description thereon.

As shown in FIG. 10, the holder 5 has a recess 25 formed in a part of the outer circumferential surface of the second columnar portion 5b. A sealing members 24 such as an O-ring is disposed in the recess 25. This can ensure the sealing between the holder 5 and the hollow body 3.

### (Tenth embodiment)

The tenth embodiment is shown in FIG. 11. The tenth embodiment is similar to the first embodiment shown in FIG. 1. Difference of this embodiment of FIG. 11 from the embodiment of FIG. 1 is in the type of an ignition device 62. The same reference characters as those in FIG. 1 refer to the corresponding members, omitting detailed description thereon.

As shown in FIG. 11, the igniter device 62 comprises the two electrode pins 9, 10 extending through the holder 5 and projecting into an igniting agent case 31 made of resin, the bridge wire 11 welded to the electrode pins 9, 10 in the igniting agent case 31, and a fuse head 32 covering the bridge wire 11 and placed in contact with the igniting agents 8.

### Capability of Exploitation in Industry

As mentioned above, the gas generator of the present invention is constructed, so that the weldable member is formed to be integral with the holder. This can provide the result that the number of producing processes and the number of components can both be reduced and thus the production costs can also be significantly reduced. In addition, it can provide the result that although the number of producing processes and the number of components can both be reduced, a high reliable gas generator can be produced. Accordingly, the gas generator of the present invention that can be produced with a reduced number of processes and a reduced cost, while providing a high reliability, is most suitable as the gas generator used for a seatbelt pretensioner or equivalent.

## Claims

1. A gas generator comprising a hollow body (3) packed with gas generant (2) for generating gas by burning, and a holder (5) disposed in an inside of the hollow body (3) and equipped with an igniter device (1),
wherein a stepped portion (12) is formed in the hollow body (3),
wherein the holder (5) comprises a holder body (16) and a weldable member (6; 33; 38; 44; 51; 59; 60) partly exposed to an outer circumferential portion of the holder (5) and is formed to fit against the stepped portion (12), and
wherein the weldable member (6; 33; 38; 44; 51; 59; 60) and the hollow body (3) are welded to seal an interior of the hollow body (3), **characterized in that** the holder body (16) is molded by an injection molding using insulating material, and **in that** the holder (5) has the weldable member (6; 33; 44) and the igniter device (1), which are formed as an integral whole by the insulating material forming the holder body (16).

2. The gas generator according to Claim 1, **characterized in that** the holder body (16) has a shoulder portion (5c), the stepped portion (12) fitting against the shoulder portion.

3. The gas generator according to any of Claims 1 or 2, **characterized in that** the weldable member (38; 44; 51) is formed so that the holder body is made unexposed.

4. The gas generator according to any of Claims 1 to 3, **characterized in that** the weldable member (6; 33; 38; 44; 51; 59; 60) comprises a tubular portion (29; 35, 37; 40, 42; 46, 48, 50; 53; 55; 59a; 60a) and a disk portion (28; 34, 39, 45, 52, 59b, 60b) forming holes (18a, 18b) therein.

5. The gas generator according to Claim 4, **characterized in that** the holes (18a) have an area in the range of 0.8mm² or more to 8mm² or less of an area of the disk portion (28, 34, 39, 45, 52, 59b, 60b).

6. The gas generator according to any one of Claims 1 to 5, **characterized in that** the tubular portion (29; 37; 50) of the weldable member (6; 33; 44) is exposed to the outer circumferential surface of the holder (5).

7. The gas generator according to any of Claims 1 to 6, **characterized in that** the weldable member (6; 33; 44) comprises a disk portion (28; 34; 45) forming a plurality of holes (18a, 18b) therein and inserted in the holder body (16), and a tubular portion (29; 37; 50) exposed to an outer circumference of the holder body (16) and having an outer diameter substantially equal to the outer circumference of other portions of the holder body (16) than the tubular portion (29; 37; 50), and **in that** the weldable member (6; 33; 44) and the holder body (16) are formed as an integral part by an insert molding.

8. The gas generator according to any of Claims 1 to 7, **characterized in that** the weldable member (6; 33; 38; 44; 51; 59; 60) is welded around an entire circumference of an opening (21) of the hollow body (3).

9. The gas generator according to any of Claims 1 to 8, **characterized in that** a seal member (61; 24) is provided in a part of the holder (5).

10. The gas generator according to any of Claims 1 to 9, **characterized in that** the hollow body (3) is crimped radially inwardly together with insulating material forming the holder (5) at a fitting engagement portion (57; 58) of the holder (5) and the hollow body (3).

## Patentansprüche

1. Gasgenerator, umfassend einen Hohlkörper (3), der mit einem Gaserzeugungsmittel (2) zum Erzeugen von Gas durch Verbrennen befüllt ist, und einem Halter (5), der in dem Innenraum des Hohlkörpers (3) angeordnet und mit einer Zündervorrichtung (1) ausgestattet ist,
wobei in dem Hohlkörper (3) ein gestufter Abschnitt (12) ausgebildet ist,
wobei der Halter (5) einen Halterkörper (16) und ein schweißbares Glied (6; 33; 38; 44; 51; 59; 60) umfaßt, das zum Teil an einem Außenumfangsabschnitt des Halters (5) freiliegt und so geformt ist, daß es gegen den gestuften Abschnitt (12) anliegt, und
wobei das schweißbare Glied (6; 33; 38; 44; 51; 59; 60) und der Hohlkörper (3) verschweißt sind, um den Innenraum des Hohlkörpers (3) abzudichten, **dadurch gekennzeichnet, daß** der Halterkörper (16) unter Verwendung von Isolationsmaterial durch Spritzgießen geformt ist und der Halter (5) das schweißbare Glied (6; 33; 44) und die Zündervorrichtung (1) aufweist, die durch das den Halterkörper (16) bildende Isolationsmaterial als untrennbares Ganzes ausgebildet sind.

2. Gasgenerator nach Anspruch 1, **dadurch gekennzeichnet, daß** der Halterkörper (16) einen Schulterabschnitt (5c) aufweist, wobei der gestufte Abschnitt (12) gegen den Schulterabschnitt (5c) anliegt.

3. Gasgenerator nach einem der Ansprüche 1 oder 2, **dadurch gekennzeichnet, daß** das schweißbare Glied (38; 44; 51) so geformt ist, daß der Halterkörper nicht freiliegend vorhanden ist.

4. Gasgenerator nach einem der Ansprüche 1 bis 3, **dadurch gekennzeichnet, daß** das schweißbare Glied (6; 33; 38; 44; 51; 59; 60) einen rohrförmigen Abschnitt (29; 35, 37; 40, 42; 46, 48, 50; 53; 55; 59a; 60a) und einen darin Öffnungen (18a, 18b bildenden scheibenförmigen Abschnitt (28; 34, 39, 45, 52, 59b, 60b) umfaßt.

5. Gasgenerator nach Anspruch 4, **dadurch gekennzeichnet, daß** die Öffnungen (18a) eine Fläche im Bereich von 0,8mm² oder mehr bis 8mm² oder weniger in einer Fläche des scheibenförmigen Abschnitts (28, 34, 39, 45, 52, 59b, 60b) aufweisen.

6. Gasgenerator nach einem der Ansprüche 1 bis 5, **dadurch gekennzeichnet, daß** der rohrförmige Abschnitt (29; 37; 50) des schweißbaren Glieds (6; 33; 44) an der Außenumfangsfläche des Halters (5) freiliegt.

7. Gasgenerator nach einem der Ansprüche 1 bis 6, **dadurch gekennzeichnet, daß** das schweißbare Glied (6; 33; 44) einen scheibenförmigen Abschnitt (28; 34; 45), der darin mehrere Löcher (18a, 18b) bildet und in den Halterkörper (16) eingesetzt ist, und einen rohrförmigen Abschnitt (29; 37; 50) umfaßt, der an einer Außenumfangsfläche des Halterkörpers (16) freiliegt und einen Außendurchmesser aufweist, der im wesentlichen gleich dem Außenumfang anderer Abschnitte des Halterkörpers (16) als dem rohrförmigen Abschnitt (29; 37; 50) ist, und das schweißbare Glied (6; 33; 44) und der Halterkörper (16) durch Einspritzen von Metall als untrennbarer Bestandteil ausgebildet sind.

8. Gasgenerator nach einem der Ansprüche 1 bis 7, **dadurch gekennzeichnet, daß** das schweißbare Glied (6; 33; 38; 44; 51; 59; 60) um einen gesamten Umfang einer Öffnung (21) des Hohlkörpers (3) herum angeschweißt ist.

9. Gasgenerator nach einem der Ansprüche 1 bis 8, **dadurch gekennzeichnet, daß** in einem Teil des Halters (5) ein Abdichtglied (61; 24) vorgesehen ist.

10. Gasgenerator nach einem der Ansprüche 1 bis 9, **dadurch gekennzeichnet, daß** der Hohlkörper (3) zusammen mit den Halter (5) bildendem Isolationsmaterial an einem Paßeingriffsabschnitt (57; 58) des Halters (5) und des Hohlkörpers (3) radial nach innen umgequetscht ist.

## Revendications

1. Générateur de gaz comportant un corps creux (3) rempli avec un produit de génération de gaz (2) destiné à générer du gaz par combustion, et un support (5) disposé à l'intérieur du corps creux (3) et équipé d'un dispositif d'allumage (1),
une partie étagée (12) étant formée dans le corps creux (3),
le support (5) comportant un corps de support (16) et un élément pouvant être soudé (6 ; 33 ; 38 ; 44 ; 51 ; 59 ; 60) partiellement exposé sur une partie circonférentielle externe du support (5) et étant formé pour s'ajuster contre la partie étagée (12), et
l'élément pouvant être soudé (6 ; 33 ; 38 ; 44 ; 51 ; 59 ; 60) et le corps creux (3) étant soudés afin d'obturer l'intérieur du corps creux (3), **caractérisé en ce que** le corps de support (16) est moulé par moulage par injection en utilisant une matière isolante, et **en ce que** le support (5) a l'élément pouvant être soudé (6 ; 33 ; 44) et le dispositif d'allumage (1) qui sont formés comme un tout par la matière isolante formant le corps de support (16).

2. Générateur de gaz selon la revendication 1, **caractérisé en ce que** le corps de support (16) a une partie d'épaulement (5c), la partie étagée (12) s'ajustant contre la partie d'épaulement.

3. Générateur de gaz selon l'une quelconque des revendications 1 ou 2, **caractérisé en ce que** l'élément pouvant être soudé (38 ; 44 ; 51) est formé de telle sorte que le corps de support est rendu non exposé.

4. Générateur de gaz selon l'une quelconque des revendications 1 à 3, **caractérisé en ce que** l'élément pouvant être soudé (6 ; 33 ; 38 ; 44 ; 51 ; 59 ; 60) comporte une partie tubulaire (29 ; 35, 37 ; 40, 42 ; 46, 48, 50 ; 53 ; 55 ; 59a ; 60a) et une partie de disque (28 ; 34, 39, 45, 52, 59b, 60b) formant des trous (18a, 18b) à l'intérieur.

5. Générateur de gaz selon la revendication 4, **caractérisé en ce que** les trous (18a) ont une section dans la plage de 0,8 mm² ou plus à 8 mm² ou moins d'une surface de la partie de disque (28, 34, 39, 45, 52, 59b, 60b).

6. Générateur de gaz selon l'une quelconque des revendications 1 à 5, **caractérisé en ce que** la partie tubulaire (29 ; 37 ; 50) de l'élément pouvant être soudé (6 ; 33 ; 44) est exposée sur la surface circonférentielle externe du support (5).

7. Générateur de gaz selon l'une quelconque des revendications 1 à 6, **caractérisé en ce que** l'élément pouvant être soudé (6 ; 33 ; 44) comporte une partie de disque (28 ; 34 ; 45) formant une multiplicité de trous (18a, 18b) à l'intérieur et inséré dans le corps de support (16), et une partie tubulaire (29 ; 37 ; 50) exposée sur une circonférence externe du corps de support (16) et ayant un diamètre extérieur sensiblement égal à la circonférence externe d'autres parties du corps de support (16) que la partie tubulaire (29 ; 37 ; 50), et **en ce que** l'élément pouvant être soudé (6 ; 33 ; 44) et le corps de support (16) sont formés en tant que partie intégrale par moulage d'insert.

8. Générateur de gaz selon l'une quelconque des revendications 1 à 7, **caractérisé en ce que** l'élément pouvant être soudé (6 ; 33 ; 38 ; 44 ; 51 ; 59 ; 60) est soudé autour d'une circonférence complète d'une ouverture (21) du corps creux (3).

9. Générateur de gaz selon l'une quelconque des revendications 1 à 8, **caractérisé en ce que** un élément d'étanchéité (61 ; 24) est prévu dans une partie du support (5).

10. Générateur de gaz selon l'une quelconque des revendications 1 à 9, **caractérisé en ce que** le corps creux (3) est serti radialement vers l'intérieur avec une matière isolante formant le support (5) au niveau d'une partie d'engagement de montage (57 ; 58) du support (5) et du corps creux (3).
